(19) Europäisches Patentamt
European Patent Office
Office européen des brevets

(11) **EP 4 653 829 A1**

(12) **EUROPEAN PATENT APPLICATION**

(43) Date of publication:
**26.11.2025 Bulletin 2025/48**

(21) Application number: 25177449.3

(22) Date of filing: **19.05.2025**

(51) International Patent Classification (IPC):
**G01J 11/00** *(2006.01)*  **H01S 3/00** *(2006.01)*

(52) Cooperative Patent Classification (CPC):
**G01J 11/00;** H01S 3/0014; H01S 3/0092

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **19.05.2024 PT 2024119471**

(71) Applicant: **Sphere Ultrafast Photonics, S.A.**
**4169-007 Porto (PT)**

(72) Inventors:
• **WEIGAND TALAVERA, Rosa Maria**
**Madrid (ES)**
• **PEREZ BENITO, Oscar**
**Madrid (ES)**
• **PAIVA REBELO CEREJO CRESPO, Helder Manuel**
**4169-007 Porto (PT)**
• **ROMERO MUNIZ, Rosa Maria**
**Madrid (ES)**

(74) Representative: **Patentree**
**Edificio Net**
**Rua de Salazares, 842**
**4149-002 Porto (PT)**

(54) **METHOD AND SYSTEM FOR TEMPORAL CHARACTERIZATION OF THE POLARIZATION STATE OF LASER PULSES**

(57) The present disclosure relates to a method and system for temporally characterizing the polarization state of laser pulses that unambiguously identifies the pulse ellipticity, its handedness and which polarization component travels ahead.

**EP 4 653 829 A1**

**Description**

**TECHNICAL FIELD**

The present disclosure relates to laser systems and laser pulse characterization methods. In particular, the disclosure relates to an optical system and to a method for temporal characterization of the polarization state of laser pulses.

**BACKGROUND**

Ultrashort polarized pulses are present in many physical systems and processes. In optomagnetic studies, a variety of processes make use of polarized laser beams to understand the interaction of spins with light (e.g., magneto-optical Faraday, Kerr, Cotton-Mouton, and Voigt effects) [1]. In high harmonic generation (HHG) the use of polarization-tailored pulses influences the interaction between the field and an atomic or solid system [2-4]. Transient states of matter can be accessed via ultrafast ellipsometry [5]. In other research fields, polarization-shaped pulses are used to coherently drive a given physical process, including multiphoton ionization, optical control of lattice vibrations, coherent Raman scattering, and nano-optics [6]. Pioneering works [7, 8] proposed the method of tomographic ultrafast retrieval of transverse light E-fields (TURTLE) using second harmonic generation frequency-resolved optical gating (SHG-FROG) to temporally characterize polarized femtosecond pulses. Different variants of this technique are difference-frequency generation cross-polarized TURTLE (DFG-XTURTLE) which combines TURTLE with cross-polarized FROG (XFROG) to characterize polarized UV laser pulses with durations of tens of femtoseconds [9] or single-scan vectorial FROG (V-FROG) which was used to characterize the polarization state of a ~40 fs laser pulse by rotating its polarization and recording a single SHG-FROG [10]. A dispersion scan (d-scan) trace is a two-dimensional spectral intensity trace were the nonlinear signal generated in a nonlinear medium is plotted as a function of the dispersion applied to the laser pulse. In particular, SHG-based d-scan makes use of a variable dispersion unit to generate phase-dependent second harmonic (SH) spectra of ultrabroadband laser pulses from a single laser beam. This trace is later processed to determine the electric field of a pulse in the time and spectral domains [18]. As in other techniques, the zero- and first-order terms of the spectral phase, which account for the relative position of the maxima of the field oscillation with respect to the envelope, and for an absolute temporal delay of the field, respectively, cannot be determined. The d-scan technique has successfully been employed for the spectro-temporal characterization of ultrashort pulses from laser oscillators [19] and amplifiers [20], has been further developed to single-shot [21] and self-diffraction [22] configurations, and to employ alternative nonlinear materials such as nanoparticles [23]. A review with more implementations of d-scan can be found in [24]. All previous works based on the d-scan technique have been focused on characterizing linearly polarized laser pulses. The d-scan method does not measure the time-dependent polarization state of a laser pulse; it only measures the electric field of linearly polarized pulses, except for the zero- and first-order phase terms mentioned above. However, other authors have employed d-scan measurements with external polarizers to demonstrate the synthesis of a pulse which is linearly polarized in a time interval which is much shorter than the original duration of the pulses [11], which is an interesting configuration for HHG [12, 13]. However, this approach has not been demonstrated as capable of determining the handedness of the polarization for arbitrarily polarized laser pulses.

The recently developed amplitude swing (A-swing) technique for the spectro-temporal characterization of ultrashort laser pulses [14] has been extended to characterize pulses of several tens of femtoseconds with temporally varying polarizations [15]. Other techniques which involve Mach-Zehnder interferometers and require a known reference pulse have also been developed to spatio-temporally characterize the polarization state of vector pulses [16, 17].

These facts are disclosed in order to illustrate the technical problem addressed by the present disclosure.

**GENERAL DESCRIPTION**

In the present disclosure, a method and system are presented for the characterization of ultra-broadband laser pulses with any polarization state. As a result, an in-line, self-referenced technique is demonstrated, which easily identifies the handedness of the field, does not have temporal ambiguities even when the polarization components do not overlap in time, and is especially suitable for few-cycle laser pulses.

polarized laser field propagating in the z direction can be described in the spectral domain through its field components $\tilde{E}_x$ $(\omega)$ and $\tilde{E}_y(\omega)$. If $\tilde{I}_{x,y}(\omega)$ and $\varphi_{x,y}(\omega)$ are the spectra and spectral phases of $\tilde{E}_x(\omega)$ and $\tilde{E}_y(\omega)$, respectively, we derive the field amplitudes from the pulse spectrum as

$$\tilde{A}_{x,y}(\omega) = \sqrt{\tilde{I}_{x,y}(\omega)}. \tag{1}$$

The electric field components can be then expressed in the spectral and temporal domains, making use of the Fourier transform as:

$$\tilde{E}_x(\omega) = \tilde{A}_x(\omega)e^{i\varphi_x(\omega)} \overset{\mathcal{F}^{-1}}{\Longrightarrow} E_x(t) = A_x(t)e^{i\phi_x(t)}$$

$$\tilde{E}_y(\omega) = \tilde{A}_y(\omega)e^{i\varphi_y(\omega)} \overset{\mathcal{F}^{-1}}{\Longrightarrow} E_y(t) = A_y(t)e^{i\phi_y(t)}, \qquad (2)$$

In order to implement an efficient retrieval algorithm, we have to take into account two important facts. On the one hand the envelopes of the Ex and Ey components may have a relative temporal delay $\tau$, and on the other hand it is convenient to consider a possible relative phase parameter $\delta$ between the oscillation of each field component (notice that $\delta$ is not a carrier-envelope phase). Therefore, we are applying a phase change to one of the electric fields in terms of $\tau$ and $\delta$. This phase change is not restricted to the use of $\tau$ and $\delta$ and can be implemented using different approaches. In our particular implementation, we describe the field components as:

$$E_x(t) = A_x(t)e^{i\phi_x(t)}$$

$$E_y(t) = A'_y(t-\tau)e^{i\left(\phi'_y(t)-\delta\right)} = A_y(t)e^{i\phi_y(t)} \qquad (3)$$

The underlying concept of our disclosure is to obtain SHG d-scan traces using a nonlinear optical crystal such as beta barium borate (BBO) oriented at different angles $\theta$ with respect to the incoming laser beam.. We consider a coordinate system defined by the plane of incidence on the BBO crystal: coordinate x (horizontal orientation) is contained in the plane of incidence, coordinate y (vertical orientation) is perpendicular to the plane of incidence, coordinate z is the propagation axis of the laser pulse, and the observer faces the light beam. We define the BBO crystal axis , $\theta = 0°$, as the orientation where the crystal generates the maximum SHG signal for horizontally polarized light. Positive and negative $\theta$ angles are measured with respect to this orientation.

Let us now consider a polarized pulse. For a horizontally oriented BBO-axis, the $E_x$ component of the electric field will generate the second harmonic (SH), while the $E_y$ component will not. If the crystal is rotated, let us say to $\theta = +45°$, then at a given time t the contribution of the $E_x$, $E_y$ components to the SH will be given by the interference of their projections on the BBO-axis. On the contrary, if the crystal is rotated to $\theta = -45°$, the projections of $E_x$ and $E_y$ have opposite directions and they destructively interfere. Therefore, the generated SH electric field will be different for both cases, as well as the d-scan traces. Notice that in the FROG implementations of TURTLE [7, 8] a polarizer creates the interference field, which is then frequency doubled in the BBO crystal, while in our implementation the BBO crystal assumes both roles.

We will now show that a set of four d-scan traces generated with the BBO crystal axis oriented horizontally (H, $\theta = 0°$), vertically (V, $\theta = 90°$), at $\theta = -45°$ and at $\theta = +45°$ allows us to temporally characterize the polarization state of any ultra-broadband few-cycle laser pulse.

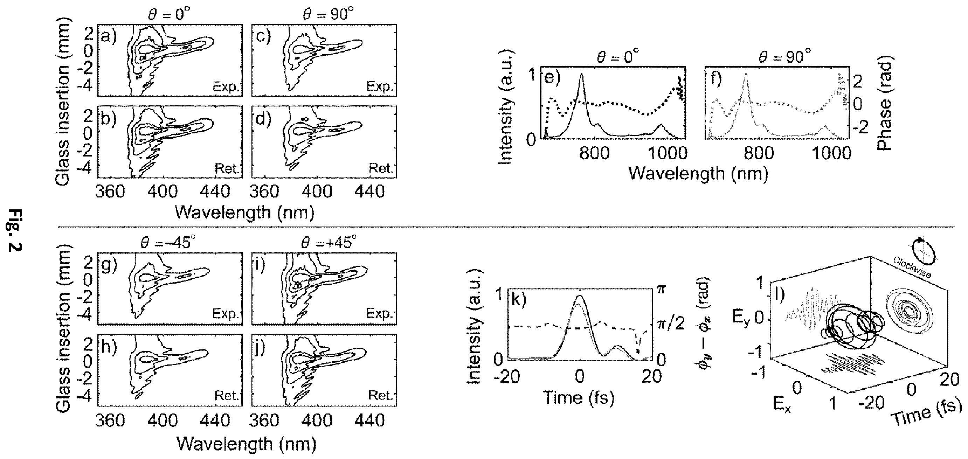

In real cases, the polarization components easily differ from each other, so the components have different field amplitudes, or different phases. In Figure 2, the traces for $\theta=0°$ and $\theta=90°$ are not identical, due to subtle differences in the amplitudes and/or spectral phases of the components. The differences are also present in the cases $\theta = +45°$. Due to these slight asymmetries, the retrieval algorithm easily identifies a phase difference $(\phi_y - \phi_x)$ close to $+\pi/2$, which corresponds to an almost circularly polarized pulse rotating clockwise, and the handedness has been unambiguously determined.

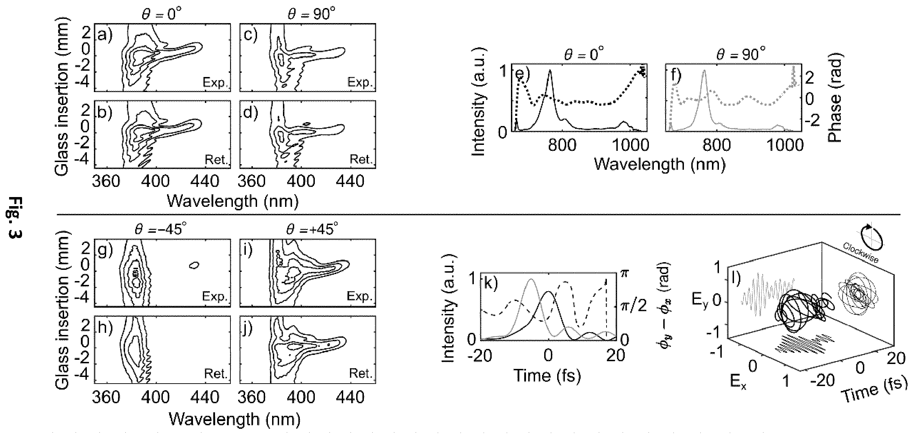

In Figure 3 we show a result where the traces obtained for $\theta = \mp 45°$ are clearly different. The polarization components are partially coincident in time, the technique perfectly identifies that the Ey component travels ahead of the Ex component and therefore the pulse polarization has a complex evolution in time. The retrieval algorithm identifies a phase difference $(\phi_y - \phi_x)$ between $+\pi/4$ to $+\pi$, which on the one hand causes significant changes in the ellipticity of the field, and on the other hand the handedness is determined as being clockwise.

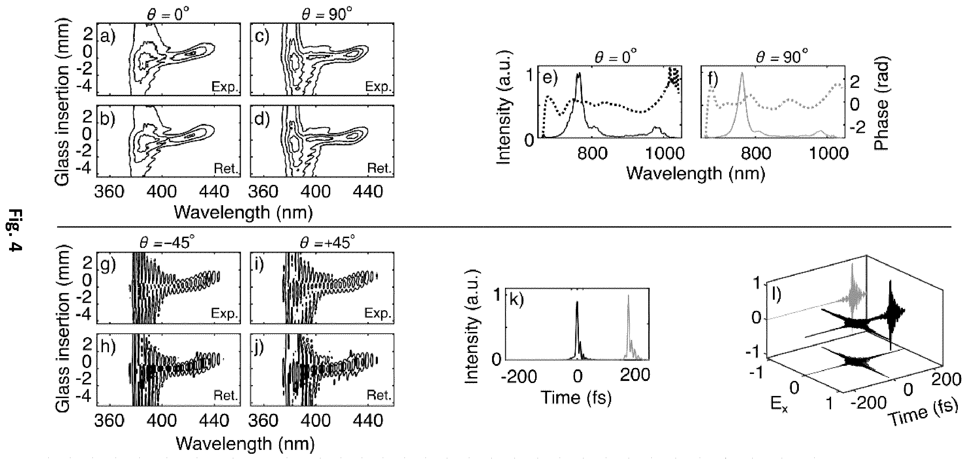

In Figure 4 we show a result where the presence of spectral interference fringes reveals that the field components are temporally far apart. In particular, the technique determines that the Ey component travels 200 fs behind the Ex component, so they are not coincident in time.

The implemented iterative retrieval algorithm was based on a standard d-scan retrieval technique combined with the description of the field components given in Eq. (3). Furthermore, any other algorithm can be implemented for the retrieval of the spectral phase of each polarization components of the laser pulse, and the relative temporal and spectral phase between both polarization components of the laser pulse. The retrieval algorithms can be iterative algorithms, machine learning algorithms, differential evolution algorithms, ptychographic algorithms, or combinations of them. These retrieval algorithms can also have, but not forcibly, one or more error functions to be minimized.

In order to carry out the method of the present disclosure, the following steps must be performed:

a. applying predetermined spectral phases (30) to the laser pulse to be characterized (20) so as to scan a dispersion range,

b. generating spectral-phase dependent nonlinear signals (22) in a nonlinear medium (31),

c. recording (32) the spectrum of the resulting spectral-phase dependent nonlinear signal as a function of the predetermined spectral phases for different orientations of the nonlinear medium, thus obtaining a two-dimensional spectral intensity trace for each orientation of the nonlinear medium (31),

d. applying an algorithm to the recorded nonlinear signals and retrieve the spectrum of each polarization component of the laser pulse (21), the spectral phase of each polarization component of the laser pulse (21) and the relative spectral phase between the two polarization components of the laser pulse (21),

e. calculating the spectral phase of the two polarization components of the laser pulse (20) by subtracting an applied predetermined spectral phase.

Before a measurement with a particular system implementation, using the method described above, a calibration of the dispersion unit must be performed to enable the temporal characterization of the polarization state of the laser pulse at the input of the system. The calibration process can also be performed using the measuring method and the retrieval algorithm, which makes the present disclosure fully self-referenced.

The results of the experiments and their subsequent retrievals demonstrate the capability of the present disclosure to determine the value and sign of the relative phase ($\phi_y$ - $\phi_x$) between field components. It can also ascertain whether the $E_x$ component precedes the $E_y$ component or vice-versa even if the polarization components do not coincide in time. The present disclosure therefore provides a complete characterization of the polarization state along the few-cycle pulse and is capable of unambiguously determining which component travels ahead, even when they do not overlap in time. The present disclosure is not limited to few-cycle pulses and can also be used with longer pulses.

We employed a Titanium-Sapphire laser oscillator which delivers few-cycle ultra-broadband horizontally polarized pulses, centered at 762 nm, at 76 MHz repetition rate and with an average power of 50 mW. To perform d-scan measurements, a set of DCMs (dispersion-compensating mirrors) and a pair of BK7 wedges were used as the dispersion unit.. The pulse exiting the dispersion unit is focused using a lens (Lens 1, f = 1 cm) onto a commercially available type-I 10-$\mu$m-thick BBO crystal cut for type I SHG (29.2°), which can be oriented at any angle $\theta$. The SHG signal is collected using a 20× microscope objective and filtered with a bandpass filter prior to being focused with a fused-silica lens (Lens 2, f = 5 cm) onto a UV solarized optical fibre (400 $\mu$m core diameter) coupled to a UV spectrometer. With the aid of a linear polarizer, the average power for each polarization component was measured, as well as the transmitted linear spectrum. The algorithm is fed with this information, in order to avoid unnecessary uncertainties, which could affect the performance of the retrieval procedure. It is also possible to retrieve the linear spectrum of each polarization component by running the algorithm with the data set for different orientations of the BBO crystal.

The set of dispersion-compensating mirrors, DCMs, and pair of glass wedges on this setup, can be replaced or combined with any component or set capable of changing the spectral phase of a laser pulse either in transmission, reflection or both, such as prisms, gratings, windows, acousto-optic modulators, electro-optic modulators, or combinations thereof.

The preferred embodiment of the present disclosure comprises the following elements:

a. a calibrated dispersion unit (30) devoted to applying predetermined spectral phases to a laser pulse with arbitrary polarization (20),

b. an optical nonlinear medium (31),

c. a sensor (32) for recording the nonlinear signal (22) generated in the nonlinear medium,

d. a data processing module (33) configured to apply an algorithm to the recorded nonlinear signal (22) to retrieve the spectrum of each polarization component of the laser pulse (20), the spectral phase of each polarization components of the laser pulse (20), and the relative temporal and spectral phase between both polarization components of the laser pulse (20).

The present disclosure has been successfully implemented to characterize few-cycle polarized pulses, uses a single beam inline geometry, and can also characterize longer pulses.

Our present disclosure is able to characterize the relative state of polarization components that are partially coincident in time, completely coincident in time or non-coincident in time.

Our present disclosure can be used with nonlinear materials that have intrinsic or induced anisotropy that can be permanent or transient.

Numerical simulations revealed that, as long as the polarization components of the total field are not mathematically identical, our disclosure relies on taking d-scan traces at four different orientation angles of a SHG-crystal, these four measurements being qualitatively and quantitatively different enough to perform a full spectro-temporal characterization of both polarization components. The retrieval algorithm developed for that purpose properly handles the relative temporal delay and phase between components. The technique has been demonstrated to be self-referenced, i.e. no additional technique is needed to spectro-temporally characterize the field of the polarized pulses.

The experimental results obtained with different systems corroborate that a set of four d-scan measurements, along with a proper algorithm, perfectly identifies the spectro-temporal characteristics of each polarization component as well as their relative temporal position, even in cases where the components do not overlap in time. In this way, the total field is therefore fully characterized and the ellipticity of the field and the handedness of the polarization vector rotation properly determined along the time axis.

Simulations and retrievals of both experimental measurements and simulated data render our present disclosure as a robust in-line and self-referenced technique to directly and unambiguously determine ellipticity, handedness and the relative temporal delay between polarization components of few-cycle polarized pulses and therefore the polarization state of laser pulses.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

Where elements are described as being connected or connectable, they may be directly connected. Where elements are described as being coupled or coupleable, they may be linked by one or more intervening or interposing elements.

## BRIEF DESCRIPTION OF THE DRAWINGS

The following figures provide preferred embodiments for illustrating the disclosure and should not be seen as limiting the scope of invention.

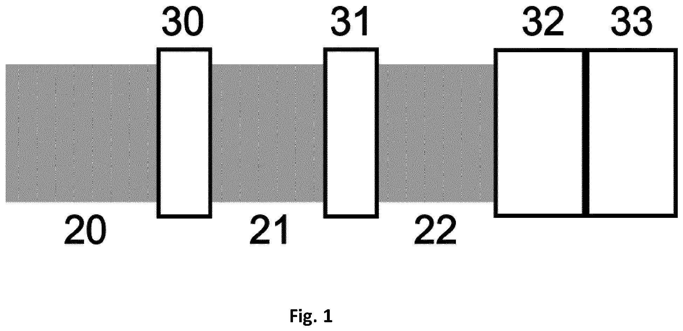

**Figure 1:** Schematic representation of a preferred embodiment of the system for characterization of the arbitrary polarization state of ultrashort laser pulses wherein 20 represents a beam of ultrashort pulses to be measured, 21 represents a light output from a variable dispersion module that applies a set of spectral phases, 22 represents a light output from a nonlinear medium, 30 represents a dispersion unit to apply a set of spectral phases to the pulses, 31 represents a nonlinear medium and 33 represents the data processing module where all calculations required to retrieve the time dependent polarization of the pulses are performed.

**Figure 2:** Experimental results for a laser pulse with circular polarization at the entrance of the implemented system. Experimental d-scan traces for the BBO crystal (nonlinear medium) with $\theta = 0°$ (a) and $\theta = 90°$ (c). Retrieved traces for the BBO crystal with $\theta = 0°$ (b) and $\theta = 90°$ (d). Measured spectra and retrieved spectral phases for the horizontal (e) and vertical (f) components. Experimental traces for the BBO crystal at $\theta = -45°$ (g) and $\theta = +45°$ (i). Retrieved traces for the BBO crystal at $\theta = -45°$ (h) and $\theta = +45°$ (j). Retrieved pulses and relative temporal phase (k). Total field (l).

**Figure 3** Experimental results for polarization components partially overlapped in time ($\tau \simeq -4$ fs). Experimental d-scan traces for the BBO crystal (nonlinear medium) at $\theta = 0°$ (a) and $\theta = 90°$ (c). Retrieved traces for the BBO crystal at $\theta = 0°$ (b) and $\theta = 90°$ (d). Measured spectra and retrieved spectral phases for the horizontal (e) and vertical (f) components. Experimental traces for the BBO crystal at $\theta = -45°$ (g) and $\theta = +45°$ (i). Retrieved traces for the BBO crystal at $\theta = -45°$ (h) and $\theta = +45°$ (j). Retrieved pulses and relative temporal phase (k). Total field (l).

**Figure 4:** Experimental results for polarization components separated in time ($\tau \simeq +200$ fs.) Experimental d-scan traces for the BBO crystal (nonlinear medium) at $\theta = 0°$ (a) and $\theta = 90°$ (c). Retrieved traces for the BBO crystal at $\theta = 0°$ (b) and $\theta = 90°$ (d). Measured spectra and retrieved spectral phases for the horizontal (e) and vertical (f) components. Experimental traces for the BBO crystal at $\theta = -45°$ (g) and $\theta = +45°$ (i). Retrieved traces for the BBO crystal at $\theta = -45°$ (h) and $\theta = +45°$ (j). Retrieved pulses and relative temporal phase (k). Total field (l).

## DETAILED DESCRIPTION

The present disclosure relates to a method and system for temporally characterizing the polarization state of laser pulses that unambiguously identifies the pulse ellipticity, its handedness and which polarization component travels ahead.

## PREFERENTIAL IMPLEMENTATION OF THE RETRIEVAL ALGORITHM

The retrieval process is run in two steps. First, the traces measured for the horizontal ($\theta = 0°$) and vertical ($\theta = 90°$)

orientations of the BBO crystal are retrieved with a standard d-scan retrieval algorithm [18, 19, 23]. The linear spectrum of each component is measured behind a linear polarizer and is supplied to the algorithm. After both retrievals, the spectral phases $\varphi_x$, $\varphi_y$ of each component are also known.

Note that since d-scan is insensitive to the zero and first-order terms of the spectral phase, the retrieved fields have zero absolute phase-shift (i.e., the maximum of the oscillation of the field carrier coincides with the maximum of the field envelope) and there is no shift in time (the maximum of the field envelope occurs for t = 0 fs). In the second step, these two spectra and spectral phases, the relative power of both components (as measured with a power meter after a linear polarizer), along with the traces measured with the BBO crystal at $\theta$ = -45o and $\theta$ = +45o, are used to feed a retrieval algorithm (we call it a $\tau$-$\delta$ retrieval algorithm) which iteratively applies different values of $\tau$ and $\delta$ to the vertical component (see Eq. 3) to simultaneously optimize the traces at $\theta$ = $\mp$45o. Values for $\tau$ are set typically in a range from -5 to 5 fs in steps of 0.1 fs for components which overlap in time, and -250 to 250 fs in steps of 1 fs for components which are separated in time. Values for $\delta$ are set in a range from $-\pi$ to $\pi$ rad, typically in steps of $\pi/16$ rad. Notice that for each value of $\tau$ the full range of values for $\delta$ is scanned. These ranges need to be adjusted depending on the case under study, reaching a compromise between precision and computational time.

In each step of the loop, i.e. for each pair of $(\tau, \delta)$ values, two traces measured with the BBO crystal at $\theta$ = -45° and $\theta$ = +45° are simulated. To find the optimal $(\tau, \delta)$ values, the error analysis is done using two different error functions that jointly evaluate the similarity between the experimental and the simulated traces. The first error function evaluates how similar the shapes of the simulated traces are with respect to their corresponding experimental ones without taking into account the intensity ratio between traces at $\theta$ = -45° and $\theta$ = +45°. This is calculated using the rms of individual rms errors as follows:

$$G = \sqrt{\frac{\left(G_{\theta=-45°}\right)^2 + \left(G_{\theta=+45°}\right)^2}{2}}, \qquad (4)$$

where the individual rms error of each trace is independently calculated as in the standard d-scan algorithm [19, 23]:

$$G_{\theta=\mp45°} = \sqrt{\frac{1}{N_\omega N_z}\sum_{i,j}^{N_\omega N_z}\left(\hat{S}_{meas,\theta=\mp45°}(\omega_i, z_j) - \hat{S}_{sim,\theta=\mp45°}(\omega_i, z_j)\right)^2}, \quad (5)$$

$\hat{s}_{meas,\theta=\mp45°}$ are the measured traces with the BBO crystal at $\theta$ = -45° or $\theta$ = +45°, normalized to their own maximum, $\hat{s}_{sim,\theta=\mp45°}$ are the simulated traces with the BBO crystal at $\theta$ = -45° or $\theta$ = +45°, normalized to their own maximum for that pair of $(\tau, \delta)$ values, $N_\omega$ is the number of points in the frequency axis and $N_z$ is the number of points in the dispersion axis.

In contrast, the second error function is the rms value of the differences between the mean value of the experimental and simulated traces at $\theta$ = -45° and $\theta$ = +45° taken into account their relative intensity. Let us define $\hat{s}_{meas,\theta=\mp45°}(\omega,z)$ as the measured trace $S_{meas,\theta=\mp45°}(\omega,z)$ normalized to the maximum between both traces, i.e.

$$\max\left[\max\left(S_{meas,\theta=-45°}(\omega, z)\right), \max\left(S_{meas,\theta=+45°}(\omega, z)\right)\right] \qquad (6)$$

and let us also define $\hat{\hat{s}}_{sim,\theta=\mp45°}(\omega, z)$ as the simulated trace $S_{sim,\theta=\mp45°}(\omega,z)$ normalized to the maximum between both traces, i.e.

$$\max\left[\max\left(S_{sim,\theta=-45°}(\omega, z)\right), \max\left(S_{sim,\theta=+45°}(\omega, z)\right)\right] \qquad (7)-$$

We can then calculate the error function R using the rms of individual differences:

$$R = \sqrt{\frac{\left(diff_{\theta=-45°}\right)^2 + \left(diff_{\theta=+45°}\right)^2}{2}} \qquad (8)$$

where *diff* is given by the difference between the mean values of the normalized measured and simulated $\hat{\hat{S}}$ traces:

$$diff_{\theta=\mp45°} = \frac{1}{N_\omega N_z}\left(\sum_{i,j}^{N_\omega N_z}\hat{\bar{S}}_{meas,\theta=\mp45°}\left(\omega_i, z_j\right) - \sum_{i,j}^{N_\omega N_z}\hat{\bar{S}}_{sim,\theta=\mp45°}\left(\omega_i, z_j\right)\right) \text{ (9)}$$

The final result for the pair of $(\tau, \delta)$ values is chosen to optimize the error functions G and R simultaneously, thus achieving retrieved traces which present shapes very similar to those measured and keep the same intensity ratio between traces (at $\theta$ = -45° and $\theta$ = +45°) that is experimentally obtained. These definitions of G and R lead to error values between 0 and 1. In the present disclosure, the values obtained for good retrievals are of the same order of magnitude than those obtained for standard d-scan retrievals ($\sim 10^{-2}$).

This algorithm has been further tested numerically by retrieving several simulated cases. In all cases, except for the unrealistic case of mathematically identical components, the retrieved values of $\tau$ and $\delta$ were the same as the ones set in the simulation, with a maximum error of 1 step ($|\Delta\tau|$ = 0.1 fs and $|\Delta\delta|$ = $\pi$/16 rad).

In summary, the retrieval algorithm must be carried out in the following way:

a. retrieving the spectrum and spectral phase of the electric field of a polarization component along an arbitrary orientation direction of the nonlinear medium by minimizing an error function between the measured and a simulated two-dimensional spectral intensity trace,

b. retrieving the spectrum and spectral phase of the electric field of a second orientation of the nonlinear medium orthogonal to the previous arbitrary orientation of the nonlinear medium by minimizing an error function between the measured and a simulated two-dimensional spectral intensity trace, for this second orientation,

c. applying, iteratively, a phase change to one of the electric fields obtained in previous steps,

d. simulating, in each iteration, two-dimensional spectral intensity traces for one or more additional orientations of the nonlinear medium,

e. calculating, in each iteration, the rms errors between a simulated two-dimensional spectral intensity trace normalized to its own maximum and the corresponding recorded two-dimensional spectral intensity trace normalized to its own maximum for all additional orientations of the nonlinear medium, to finally calculate a first error function consisting of the rms of all the previously calculated rms errors,

f. calculating, in each iteration, for all the additional orientations of the nonlinear medium, the difference between the mean value of a simulated two-dimensional spectral intensity trace, normalized to the absolute maximum of all maxima of all traces simulated for all the additional orientations, and the mean value of the corresponding recorded two-dimensional spectral intensity trace, normalized to the absolute maximum of all maxima of all traces recorded for all additional orientations, to finally calculate a second error function consisting of the rms of all the previously calculated differences,

g. calculating the relative spectral phase between the two polarization components by locating the minimum of the second error function in the vicinity of the lowest minimum of the first error function.

## OTHER RETRIEVAL IMPLEMENTATIONS

The retrieval algorithm can replace the step of retrieving the linear spectrum of each component by using the actual measurement of the linear spectrum of each polarization component of the laser pulse.

The retrieval algorithm can also be used if other orientations different from +45° and -45° are used.

The retrieval algorithm can be implemented with machine learning algorithms, differential evolution algorithms or other type of algorithms that would retrieve or obtain the spectrum of each polarization component of the laser pulse (however, this spectrum can also be measured for each polarization component of the laser pulse and be an input for the algorithm) and the spectral phase of each polarization components of the laser pulse and the relative temporal and spectral phase between both polarization components of the laser pulse. The spectrum of each polarization component of the laser pulse can be retrieved or can also be measured for each polarization component of the laser pulse and be an input for the algorithm.

It will be appreciated by those of ordinary skill in the art that unless otherwise indicated herein, the particular sequence of steps described is illustrative only and can be varied without departing from the disclosure. Thus, unless otherwise stated the steps described are so unordered meaning that, when possible, the steps can be performed in any convenient or desirable order.

It is to be appreciated that certain embodiments of the disclosure as described herein may be incorporated as code (e.g., a software algorithm or program) residing in firmware and/or on computer useable medium having control logic for enabling execution on a computer system having a computer processor, such as any of the servers described herein. Such a computer system typically includes memory storage configured to provide output from execution of the code which configures a processor in accordance with the execution. The code can be arranged as firmware or software, and can be organized as a set of modules, including the various modules and algorithms described herein, such as discrete code modules, function calls, procedure calls or objects in an object-oriented programming environment. If implemented using modules, the code can comprise a single module or a plurality of modules that operate in cooperation with one another to configure the machine in which it is executed to perform the associated functions, as described herein.

In certain embodiments, the computer data processor is configured to execute software, firmware, or other executable instructions designed to implement the features, methods, or systems disclosed herein. These embodiments may be implemented as standalone devices, as part of a distributed system, or within a cloud computing environment.

The foregoing description of the specific implementations will so fully reveal the general nature of the disclosure that others can, by applying knowledge within the skill of the relevant art(s), readily modify and/or adapt for various applications such specific implementations, without undue experimentation, without departing from the general concept of the present disclosure. Such adaptations and modifications are therefore intended to be within the meaning and range of equivalents of the disclosed implementations, based on the teaching and guidance presented herein. It is to be understood that the phraseology or terminology herein is for the purpose of description and not of limitation, such that the terminology or phraseology of the present specification is to be interpreted by the skilled artisan in light of the teachings and guidance presented herein, in combination with the knowledge of one skilled in the relevant art(s). It is to be understood that dimensions discussed or shown are drawings accordingly to one example and other dimensions can be used without departing from the disclosure.

The disclosure should not be seen in any way restricted to the embodiments described and a person with ordinary skill in the art will foresee many possibilities to modifications thereof.

The above described embodiments are combinable.

The following claims further set out particular embodiments of the disclosure.

*REFERENCES*

[1] D. Bossini, V. I. Belotelov, A. K. Zvezdin, A. N. Kalish, A. V. Kimel, Magnetoplasmonics and femtosecond optomagnetism at the nanoscale, ACS Photonics 3 (8) (2016) 1385-1400. doi:https://doi.org/10.1021/acsphotonics.6b00107.

[2] J. Kasza, I. Magashegyi, P. Dombi, P. Földi, Polarization dependence of atomic high-order harmonic generation: Description using a discrete basis, Phys. Rev. A 105 (2022) 033105. doi:10.1103/PhysRevA.105.033105.

[3] N. Klemke, N. Tancogne-Dejean, G. M. Rossi, Y. Yang, F. Scheiba, R. Mainz, G. Di Sciacca, A. Rubio, F. Kärtner, O. Mücke, Polarization-state-resolved high-harmonic spectroscopy of solids, Nat. Commun. 10 (1) (2019) 1319. doi:10.1038/s41467-019-09328-1.

[4] T. Heinrich, M. Taucer, O. Kfir, P. Corkum, A. Staudte, C. Ropers, M. Sivis, Chiral high-harmonic generation and spectroscopy on solid surfaces using polarization-tailored strong fields, Nat. Commun. 12 (1) (2021) 3723. doi:10.1038/s41467-021-23999-9.

[5] S. Richter, M. Rebarz, O. Herrfurth, S. Espinoza, R. Schmidt-Grund, J. Andreasson, Broadband femtosecond spectroscopic ellipsometry, Rev. Sci. Instrum. 92 (3) (2021) 033104. doi:https://doi.org/10.1063/5.0027219.

[6] K. Misawa, Applications of polarization-shaped femtosecond laser pulses, Adv. Phys.: X 1 (4) (2016) 544-569. doi:10.1080/23746149.2016.1221327.

[7] P. Schlup, O. Masihzadeh, L. Xu, R. Trebino, R. A. Bartels, Tomographic retrieval of the polarization state of an ultrafast laser pulse, Opt. Lett. 33 (3) (2008) 267-269. doi:10.1364/OL.33.000267.

[8] L. Xu, P. Schlup, O. Masihzadeh, R. A. Bartels, R. Trebino, Analysis of the measurement of polarization-shaped ultrashort laser pulses by tomographic ultrafast retrieval of transverse light e fields, J. Opt. Soc. Am. B 26 (12) (2009) 2363-2369. doi:10.1364/JOSAB.26.002363.

[9] M. T. Seidel, Z. Zhang, S. Yan, K. L. Wells, H.-S. Tan, Characterization of polarization shaped ultraviolet femtosecond laser pulses, J. Opt. Soc. Am. B 28 (11) (2011) 2718-2725. doi:10.1364/JOSAB.28.002718.

[10] G. I. Haham, A. Levin, P. Sidorenko, G. Lerner, O. Cohen, Vfrog-single-scan vectorial frog, J. Phys. Photonics 3 (3) (2021) 034017. doi:10.1088/2515-7647/ac0541.

[11] D. D. Rivas, A.-K. Raab, C. Guo, A.-L. Viotti, I. Sytcevich, A. L'Huillier, C. Arnold, Measurement of ultrashort laser pulses with a time-dependent polarization state using the d-scan technique, J. Physics: Photonics 6 (1), 015003 (2024). doi: 10.1088/2515-7647/ad1c6c

[12] R. López-Martens, J. Mauritsson, P. Johnsson, A. L'Huillier, O. Tcherbakoff, A. Zaïr, E. Mével, E. Constant, Time-resolved ellipticity gating of high-order harmonic emission, Phys. Rev. A 69 (2004) 053811. doi:10.1103/PhysRevA.69.053811.

[13] I. J. Sola, A. Zaïr, R. López-Martens, P. Johnsson, K. Varjú, E. Cormier, J. Mauritsson, A. L'Huillier, V. Strelkov, E. Mével, E. Constant, Temporal and spectral studies of high-order harmonics generated by polarization modulated infrared fields, Phys. Rev. A 74 (2006) 013810. doi:10.1103/PhysRevA.74.013810.

[14] B. Alonso, W. Holgado, Í. J. Sola, Compact in-line temporal measurement of laser pulses with amplitude swing, Opt. Express 28 (10) (2020) 15625-15640. doi:10.1364/OE.386321.

[15] Barbero, C., Alonso, B., & Sola, Í. J. (2024). Characterization of ultrashort vector pulses from a single amplitude swing measurement. Opt. Express, 32(7), 10862-10873. doi: https://doi.org/10.1364/OE.515198

[16] B. Alonso, I. Lopez-Quintas, W. Holgado, R. Drevinskas, P. G. Kazansky, C. Hernández-García, Í. J. Sola, Complete spatiotemporal and polarization characterization of ultrafast vector beams, Commun. Phys. 3 (1) (2020). doi:10.1038/s42005-02000419-w.

[17] A. Zdagkas, V. Nalla, N. Papasimakis, N. I. Zheludev, Spatiotemporal characterization of ultrashort vector pulses, APL Photonics 6 (11) (2021) 116103. doi:10.1063/5.0056066.

[18] M. Miranda, T. Fordell, C. Arnold, A. L'Huillier, H. Crespo, Simultaneous compression and characterization of ultrashort laser pulses using chirped mirrors and glass wedges, Opt. Express 20 (1) (2012) 688-697. doi:10.1364/OE.20.000688.

[19] M. Miranda, C. L. Arnold, T. Fordell, F. Silva, B. Alonso, R. Weigand, A. L'Huillier, H. Crespo, Characterization of broadband few-cycle laser pulses with the dscan technique, Opt. Express 20 (17) (2012) 18732-18743. doi:10.1364/OE.20.018732.

[20] B. Alonso, I. J. Sola, H. Crespo, Self-calibrating d-scan: measuring ultrashort laser pulses on-target using an arbitrary pulse compressor, Sci. Rep. 8 (2018) 3264. doi:10.1038/s41598-01821701-6.

[21] F. J. Salgado-Remacha, B. Alonso, H. Crespo, C. Cojocaru, J. Trull, R. Romero, M. López-Ripa, P. T. Guerreiro, F. Silva, M. Miranda, A. L'Huillier, C. L. Arnold, I. J. Sola, Single shot d-scan technique for ultrashort laser pulse characterization using transverse second-harmonic generation in random nonlinear crystals, Opt. Lett. 45 (14) (2020) 3925-3928. doi:10.1364/OL.397033.

[22] M. Canhota, F. Silva, R. Weigand, H. M. Crespo, Inline self-diffraction dispersion-scan of over octave-spanning pulses in the single-cycle regime, Opt. Lett. 42 (15) (2017) 3048-3051. doi:10.1364/OL.42.003048.

[23] O. Pérez-Benito, R. Weigand, Nano-dispersion-scan: measurement of sub-7-fs laser pulses using second-harmonic nanoparticles, Opt. Lett. 44 (20) (2019) 4921-4924. doi:10.1364/OL.44.004921.

[24] I. Sytcevich, C. Guo, S. Mikaelsson, J. Vogelsang, A.-L. Viotti, B. Alonso, R. Romero, P. T. Guerreiro, I. J. Sola, A. L'Huillier, H. Crespo, M. Miranda, C. L. Arnold, Characterizing ultrashort laser pulses with second harmonic dispersion scans, J. Opt. Soc. Am. B 38 (5) (2021) 1546-1555. doi:10.1364/JOSAB.412535.

**Claims**

1. System for the in-line temporal characterization of arbitrary polarization states of laser pulses, the system comprising:

   a calibrated dispersion unit (30) devoted to applying predetermined spectral phases to a laser pulse with arbitrary polarization (20);
   an optical nonlinear medium (31);
   a sensor (32) for recording the nonlinear signal (22) generated in the nonlinear medium; and
   a data processing module (33) configured to apply an algorithm to the recorded nonlinear signal (22) to retrieve the spectrum of each polarization component of the laser pulse (20), the spectral phase of each polarization components of the laser pulse (20), and the relative temporal and spectral phase between both polarization components of the laser pulse (20).

2. System according to the previous claim, wherein the calibrated dispersion unit devoted to applying predetermined spectral phases comprises chirped mirrors, glass wedges, prisms, gratings, reflective windows, transmission windows, acousto-optic modulators, electro-optic modulators, or combinations thereof.

3. System according to any of the previous claims, wherein the optical nonlinear medium comprises gases, solids, liquids, plasmas, or combinations thereof, capable of one or more of the following nonlinear optical processes: second harmonic generation, sum-frequency generation, difference-frequency generation, the optical Kerr effect and related nonlinear phase modulation effects, cross-phase modulation, cross-polarized wave generation, third harmonic generation and higher-order harmonic generation.

4. System according to the previous claim, wherein the optical nonlinear medium is an anisotropic medium, wherein this anisotropy is either permanent or transient.

5. A method for the in-line temporal characterization of the polarization state of laser pulses, which makes use of the apparatus described in the previous claims, the method comprising:

a. applying predetermined spectral phases to the laser pulse to be characterized so as to scan a dispersion range;

b. generating spectral-phase dependent nonlinear signals in a nonlinear medium;

c. recording the spectrum of the resulting spectral-phase dependent nonlinear signal as a function of the predetermined spectral phases for different orientations of the nonlinear medium, thus obtaining a two-dimensional spectral intensity trace for each orientation of the nonlinear medium;

d. applying an algorithm to the recorded nonlinear signals and retrieve the spectrum of each polarization component of the laser pulse, the spectral phase of each polarization component of the laser pulse and the relative spectral phase between the two polarization components of the laser pulse; and

e. calculating the spectral phase of the two polarization components of the laser pulse by subtracting an applied predetermined spectral phase.

6. Method according to the previous claim, wherein the laser pulse is a few-cycle laser pulse.

7. Method according to any of the previous claims 5-6, wherein the applied spectral phases so as to scan a dispersion range are not predetermined.

8. Method according to any of the previous claims 5-7, wherein the algorithm comprises:

a. retrieving the spectrum and spectral phase of the electric field of a polarization component along an arbitrary orientation direction of the nonlinear medium by minimizing an error function between the measured and a simulated two-dimensional spectral intensity trace;

b. retrieving the spectrum and spectral phase of the electric field of a second orientation of the nonlinear medium orthogonal to the previous arbitrary orientation of the nonlinear medium by minimizing an error function between the measured and a simulated two-dimensional spectral intensity trace, for this second orientation;

c. applying, iteratively, a phase change to one of the electric fields obtained in previous steps;

d. simulating, in each iteration, two-dimensional spectral intensity traces for one or more additional orientations of the nonlinear medium;

e. calculating, in each iteration, the rms errors between a simulated two-dimensional spectral intensity trace normalized to its own maximum and the corresponding recorded two-dimensional spectral intensity trace normalized to its own maximum for all additional orientations of the nonlinear medium, to finally calculate a first error function consisting of the rms of all the previously calculated rms errors;

f. calculating, in each iteration, for all the additional orientations of the nonlinear medium, the difference between the mean value of a simulated two-dimensional spectral intensity trace, normalized to the absolute maximum of all maxima of all traces simulated for all the additional orientations, and the mean value of the corresponding recorded two-dimensional spectral intensity trace, normalized to the absolute maximum of all maxima of all traces recorded for all additional orientations, to finally calculate a second error function consisting of the rms of all the previously calculated differences; and

g. calculating the relative spectral phase between the two polarization components by locating the minimum of the second error function in the vicinity of the lowest minimum of the first error function

9. Method according to any of the previous claims 5-8, wherein the algorithm to retrieve the spectrum of each polarization component of the laser pulse, the spectral phase of each polarization component of the laser pulse and the relative temporal and spectral phase between both polarization components of the pulse to be characterized, comprises an algorithm selected from the group consisting of:an iterative algorithm, a machine learning algorithm, a differential evolution algorithm, a ptychographic algorithm, or combinations thereof.

10. Method according to any of the previous claims 5-9, wherein the polarization state components of the laser pulse

are partially coincident in time or
are not coincident in time or
are totally coincident in time.

**Fig. 1**

Fig. 2

Fig. 3

**Fig. 4**

Europäisches
Patentamt

European
Patent Office

Office européen
des brevets

## EUROPEAN SEARCH REPORT

**Application Number**

EP 25 17 7449

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DANIEL DIAZ RIVAS ET AL: "Measurement of Ultrashort Laser Pulses With a Time-Dependent Polarization State Using the D-Scan Technique", ARXIV.ORG, CORNELL UNIVERSITY LIBRARY, 201 OLIN LIBRARY CORNELL UNIVERSITY ITHACA, NY 14853, 4 September 2023 (2023-09-04), XP091605295, * abstract; figures 1-8 * * page 4, paragraph 2 - page 5, paragraph 1 * * page 6, paragraph 6 - page 8, paragraph 8 * | 1-10 | INV. G01J11/00 ADD. H01S3/00 |
| A | EP 3 584 552 A1 (UNIV SALAMANCA [ES]; SPHERE ULTRAFAST PHOTONICS S L [ES]) 25 December 2019 (2019-12-25) * figure 1 * * paragraph [0016] - paragraph [0025] * | 1-10 | |
| A | LÓPEZ-LAGO E ET AL: "Measurement of the polarization dynamics of ultrashort pulses by using nonlinear phase modulation and channelled spectroscopic polarimetry", JOURNAL OF OPTICS. A, PURE AND APPLIED OPTICS, INSTITUTE OF PHYSICS PUBLISHING, BRISTOL, GB, vol. 7, no. 8, 2 August 2005 (2005-08-02), pages 400-403, XP020093151, ISSN: 1464-4258, DOI: 10.1088/1464-4258/7/8/009 * abstract; figure 1 * * page 401, right-hand column, paragraph 2 - page 403, right-hand column, paragraph 1 * | 1-10 | **TECHNICAL FIELDS SEARCHED (IPC)** G01J H01S |

-/--

The present search report has been drawn up for all claims

| Place of search | Date of completion of the search | Examiner |
|---|---|---|
| Munich | 11 September 2025 | Gangl, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

**Application Number**

EP 25 17 7449

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2021/123481 A1 (UNIV SALAMANCA [ES]; SPHERE ULTRAFAST PHOTONICS S L [ES]) 24 June 2021 (2021-06-24) * page 10, line 14 - page 12, line 27; figures 1-6 * | 1-10 | |
| A | MIRANDA MIGUEL ET AL: "Ultrashort pulse characterization from dispersion scans with a grating compressor", 2016 CONFERENCE ON LASERS AND ELECTRO-OPTICS (CLEO), OSA, 5 June 2016 (2016-06-05), pages 1-2, XP033025289, [retrieved on 2016-12-16] * abstract; figure 1 * * page 1, paragraph 3 - page 2, paragraph 4 * | 1-10 | |

TECHNICAL FIELDS
SEARCHED     (IPC)

The present search report has been drawn up for all claims

| Place of search | Date of completion of the search | Examiner |
|---|---|---|
| Munich | 11 September 2025 | Gangl, Martin |

EPO FORM 1503 03.82 (P04C01)

page 2 of 2

**EP 4 653 829 A1**

## ANNEX TO THE EUROPEAN SEARCH REPORT
## ON EUROPEAN PATENT APPLICATION NO.

EP 25 17 7449

11-09-2025

| Patent document cited in search report | | Publication date | Patent family member(s) | | Publication date |
|---|---|---|---|---|---|
| EP 3584552 | A1 | 25-12-2019 | EP | 3584552 A1 | 25-12-2019 |
| | | | ES | 2680045 A1 | 03-09-2018 |
| | | | US | 2020025628 A1 | 23-01-2020 |
| | | | WO | 2018150071 A1 | 23-08-2018 |
| WO 2021123481 | A1 | 24-06-2021 | EP | 4080179 A1 | 26-10-2022 |
| | | | ES | 2835125 A1 | 21-06-2021 |
| | | | US | 2022407279 A1 | 22-12-2022 |
| | | | WO | 2021123481 A1 | 24-06-2021 |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **D. BOSSINI** ; **V. I. BELOTELOV** ; **A. K. ZVEZDIN** ; **A. N. KALISH** ; **A. V. KIMEL**. Magnetoplasmonics and femtosecond optomagnetism at the nanoscale. *ACS Photonics*, 2016, vol. 3 (8), 1385-1400
- **J. KASZA** ; **I. MAGASHEGYI** ; **P. DOMBI** ; **P. FÖLDI**. Polarization dependence of atomic high-order harmonic generation: Description using a discrete basis. *Phys. Rev. A*, 2022, vol. 105, 033105
- **N. KLEMKE** ; **N. TANCOGNE-DEJEAN** ; **G. M. ROSSI** ; **Y. YANG** ; **F. SCHEIBA** ; **R. MAINZ** ; **G. DI SCIACCA** ; **A. RUBIO** ; **F. KÄRTNER** ; **O. MÜCKE**. Polarization-state-resolved high-harmonic spectroscopy of solids. *Nat. Commun.*, 2019, vol. 10 (1), 1319
- **T. HEINRICH** ; **M. TAUCER** ; **O. KFIR** ; **P. CORKUM** ; **A. STAUDTE** ; **C. ROPERS** ; **M. SIVIS**. Chiral high-harmonic generation and spectroscopy on solid surfaces using polarization-tailored strong fields. *Nat. Commun.*, 2021, vol. 12 (1), 3723
- **S. RICHTER** ; **M. REBARZ** ; **O. HERRFURTH** ; **S. ESPINOZA** ; **R. SCHMIDT-GRUND** ; **J. ANDREAS-SON**. Broadband femtosecond spectroscopic ellipsometry. *Rev. Sci. Instrum.*, 2021, vol. 92 (3), 033104
- **K. MISAWA**. Applications of polarization-shaped femtosecond laser pulses. *Adv. Phys.: X*, 2016, vol. 1 (4), 544-569
- **P. SCHLUP** ; **O. MASIHZADEH** ; **L. XU** ; **R. TREBINO** ; **R. A. BARTELS**. Tomographic retrieval of the polarization state of an ultrafast laser pulse. *Opt. Lett.*, 2008, vol. 33 (3), 267-269
- **L. XU** ; **P. SCHLUP** ; **O. MASIHZADEH** ; **R. A. BARTELS** ; **R. TREBINO**. Analysis of the measurement of polarization-shaped ultrashort laser pulses by tomographic ultrafast retrieval of transverse light e fields. *J. Opt. Soc. Am. B*, 2009, vol. 26 (12), 2363-2369
- **M. T. SEIDEL** ; **Z. ZHANG** ; **S. YAN** ; **K. L. WELLS** ; **H.-S. TAN**. Characterization of polarization shaped ultraviolet femtosecond laser pulses. *J. Opt. Soc. Am. B*, 2011, vol. 28 (11), 2718-2725
- **G. I. HAHAM** ; **A. LEVIN** ; **P. SIDORENKO** ; **G. LERNER** ; **O. COHEN**. Vfrog-single-scan vectorial frog. *J. Phys. Photonics*, 2021, vol. 3 (3), 034017

- **D. D. RIVAS** ; **A.-K. RAAB** ; **C. GUO** ; **A.-L. VIOTTI** ; **I. SYTCEVICH** ; **A. L'HUILLIER** ; **C. ARNOLD**. Measurement of ultrashort laser pulses with a time-dependent polarization state using the d-scan technique. *J. Physics: Photonics*, 2024, vol. 6 (1), 015003
- **R. LÓPEZ-MARTENS** ; **J. MAURITSSON** ; **P. JOHNSSON** ; **A. L'HUILLIER** ; **O. TCHERBAKOFF** ; **A. ZAÏR** ; **E. MÉVEL** ; **E. CONSTANT**. Time-resolved ellipticity gating of high-order harmonic emission. *Phys. Rev. A*, 2004, vol. 69, 053811
- **I. J. SOLA** ; **A. ZAÏR** ; **R. LÓPEZ-MARTENS** ; **P. JOHNSSON** ; **K. VARJÚ** ; **E. CORMIER** ; **J. MAURITSSON** ; **A. L'HUILLIER** ; **V. STRELKOV** ; **E. MÉVEL**. Temporal and spectral studies of high-order harmonics generated by polarization modulated infrared fields. *Phys. Rev. A*, 2006, vol. 74, 013810
- **B. ALONSO** ; **W. HOLGADO** ; **Í. J. SOLA**. Compact in-line temporal measurement of laser pulses with amplitude swing. *Opt. Express*, 2020, vol. 28 (10), 15625-15640
- **BARBERO, C.** ; **ALONSO, B.** ; **SOLA, Í. J.** Characterization of ultrashort vector pulses from a single amplitude swing measurement. *Opt. Express*, 2024, vol. 32 (7), 10862-10873
- **B. ALONSO** ; **I. LOPEZ-QUINTAS** ; **W. HOLGADO** ; **R. DREVINSKAS** ; **P. G. KAZANSKY** ; **C. HERNÁN-DEZ-GARCÍA** ; **Í. J. SOLA**. Complete spatiotemporal and polarization characterization of ultrafast vector beams. *Commun. Phys.*, 2020, vol. 3 (1)
- **A. ZDAGKAS** ; **V. NALLA** ; **N. PAPASIMAKIS** ; **N. I. ZHELUDEV**. Spatiotemporal characterization of ultrashort vector pulses. *APL Photonics*, 2021, vol. 6 (11)
- **M. MIRANDA** ; **T. FORDELL** ; **C. ARNOLD** ; **A. L'HUILLIER** ; **H. CRESPO**. Simultaneous compression and characterization of ultrashort laser pulses using chirped mirrors and glass wedges. *Opt. Express*, 2012, vol. 20 (1), 688-697
- **M. MIRANDA** ; **C. L. ARNOLD** ; **T. FORDELL** ; **F. SILVA** ; **B. ALONSO** ; **R. WEIGAND** ; **A. L'HUILLIER** ; **H. CRESPO**. Characterization of broadband few-cycle laser pulses with the dscan technique. *Opt. Express*, 2012, vol. 20 (17), 18732-18743
- **B. ALONSO** ; **I. J. SOLA** ; **H. CRESPO**. Self-calibrating d-scan: measuring ultrashort laser pulses on-target using an arbitrary pulse compressor. *Sci. Rep.*, 2018, vol. 8

- **F. J. SALGADO-REMACHA** ; **B. ALONSO** ; **H. CRESPO** ; **C. COJOCARU** ; **J. TRULL** ; **R. ROMERO** ; **M. LÓPEZ-RIPA** ; **P. T. GUERREIRO** ; **F. SILVA** ; **M. MIRANDA**. Single shot d-scan technique for ultrashort laser pulse characterization using transverse second-harmonic generation in random nonlinear crystals. *Opt. Lett.*, 2020, vol. 45 (14), 3925-3928
- **M. CANHOTA** ; **F. SILVA** ; **R. WEIGAND** ; **H. M. CRESPO**. Inline self-diffraction dispersion-scan of over octave-spanning pulses in the single-cycle regime. *Opt. Lett.*, 2017, vol. 42 (15), 3048-3051
- **O. PÉREZ-BENITO** ; **R. WEIGAND**. Nano-dispersion-scan: measurement of sub-7-fs laser pulses using second-harmonic nanoparticles. *Opt. Lett.*, 2019, vol. 44 (20), 4921-4924
- **I. SYTCEVICH** ; **C. GUO** ; **S. MIKAELSSON** ; **J. VOGELSANG** ; **A.-L. VIOTTI** ; **B. ALONSO** ; **R. ROMERO** ; **P. T. GUERREIRO** ; **I. J. SOLA** ; **A. L'HUILLIER**. Characterizing ultrashort laser pulses with second harmonic dispersion scans. *J. Opt. Soc. Am. B*, 2021, vol. 38 (5), 1546-1555